# FASCICULE DE BREVET EUROPEEN

(11) **EP 1 864 402 B1**
(45) Date de publication et mention de la délivrance du brevet: **12.03.2014**
(21) Numéro de dépôt: 06704130.1
(22) Date de dépôt: 27.01.2006
(51) Int. Cl.: G01S 19/21, G01S 19/36, H04B 7/08

(54) **ARCHITECTURE SECURISEE DE RADIONAVIGATION A COMMUTATION D'ANTENNES**
SICHERE FUNKNAVIGATIONSARCHITEKTUR MIT ANTENNENUMSCHALTUNG
SECURE RADIO NAVIGATION ARCHITECTURE WITH ANTENNA SWITCHING

(30) Priorité: 28.01.2005 FR 0500904
(43) Date de publication de la demande: 12.12.2007
(73) Titulaire: Sagem Défense Sécurité, 92100 Boulogne-Billancourt (FR)
(72) Inventeur: CHAMINADAS, Francis, F-78340 Les Clayes Sous Bois (FR); DEBANNE, Pascal, F-95300 Pontoise (FR); JAEGER, Christian, 75015 Paris (FR)
(74) Mandataire: Regimbeau
(86) Numéro de dépôt international: PCT/EP2006/050488
(87) Numéro de publication internationale: WO 2006/079654

(56) Documents cités:
- EP-A- 0 455 943
- EP-A- 1 098 454
- WO-A-2004/040328
- US-A- 5 818 389
- US-A1- 2003 156 561

## Description

### DOMAINE TECHNIQUE GENERAL

La présente invention concerne une architecture sécurisée de radionavigation à commutation d'antennes.

Plus précisément, elle concerne une architecture de radionavigation apte à fonctionner dans une ambiance brouillée tout en garantissant simplement un haut niveau de sécurité en ambiance non brouillée.

### ETAT DE L'ART

La technique de positionnement par satellites (système GPS, Global Positioning System ou système GALILEO) est connue de l'homme du métier. Les systèmes mettant en oeuvre cette technique déterminent la position d'un véhicule ou d'un appareil mobile en se servant des signaux radio émis par une constellation de satellites en orbite autour de la Terre (radiolocalisation). Les signaux émis par les satellites sont captés par un appareil récepteur installé dans le mobile. Le récepteur détermine par une méthode de triangulation en trois dimensions la position du mobile. Cette triangulation nécessite de mesurer les distances séparant les satellites du récepteur et de connaître la position desdits satellites. Ces données de distance et ces données géographiques sont obtenues par un traitement informatisé et approprié des signaux reçus des satellites. En réalité quatre satellites au minimum sont requis pour le calcul de triangulation car le temps de référence sur lequel sont synchronisés leurs signaux est inconnu du récepteur.

Pour obtenir une grande précision de positionnement, le récepteur a intérêt à utiliser tous les satellites dont les signaux reçus sont forts et exploitables. En cas de perturbation de ces signaux par d'autres signaux électromagnétiques (brouillage intentionnel ou non), le positionnement peut être dégradé, voire rendu impossible.

Un des moyens connus pour atténuer l'effet délétère de ces signaux perturbateurs consiste à utiliser une antenne dont le diagramme de rayonnement est contrôlé avantageusement de façon à favoriser les signaux satellites et à atténuer les signaux perturbateurs. Ce type d'antenne est connu sous le nom anglo-saxon de CRPA (Controlled Reception Pattern Antenna).

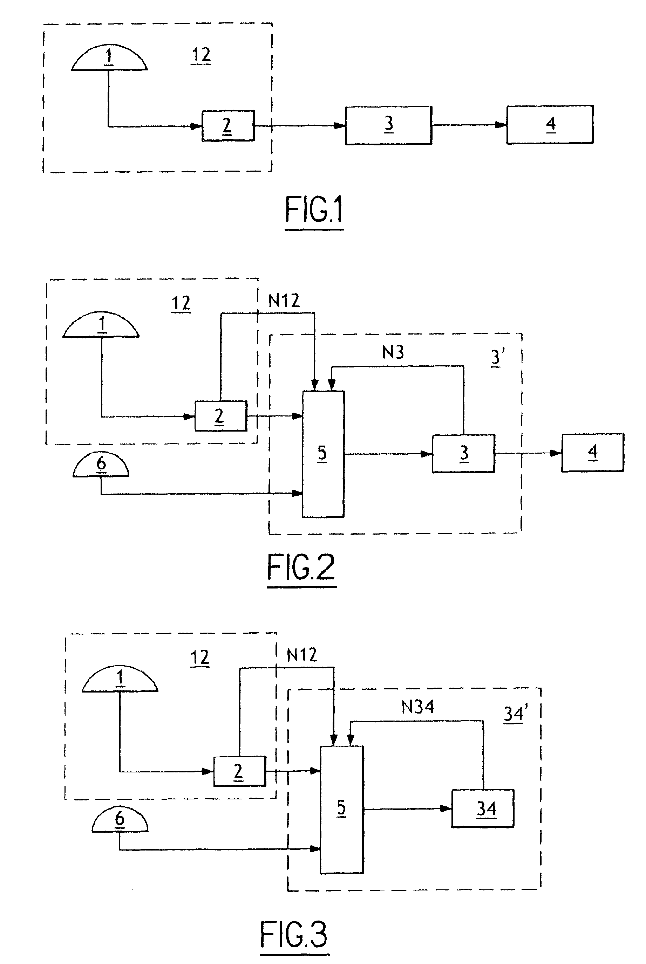

La figure 1 représente schématiquement une architecture connue d'un système de radionavigation protégé contre les interférences.

Elle comprend principalement, une antenne CRPA 12 constituée d'un plateau d'antennes 1, d'un module 2 de calcul et de contrôle électronique, et d'un récepteur 3 de positionnement par satellites qui fournit la localisation du mobile sous la forme connue d'une solution PVT (Position, Vitesse, Temps) à un système de navigation 4. Le module 2 forme des moyens de commande du plateau d'antennes 1.

Le plateau d'antennes connu 1 est composé d'une pluralité d'antennes élémentaires (typiquement sept antennes élémentaires simples). Ces antennes élémentaires fournissent au module 2 les signaux en provenance des satellites. Un traitement numérique approprié effectué par le module 2 de calcul et de contrôle permet de fournir au récepteur 3 des signaux qui semblent provenir d'une antenne dont le diagramme de rayonnement a été adapté de façon optimale en fonction du contexte de brouillage.

Par exemple, en cas de brouillage, le diagramme de rayonnement est déformé de façon à créer un trou de réception en direction du brouilleur. L'adaptation du diagramme de rayonnement s'effectue grâce à des calculs complexes effectuant des pondérations en phase et en amplitude des signaux reçus des antennes élémentaires composant le plateau d'antennes 1.

En cas de brouillage, l'antenne CRPA 12 a pour but d'éviter une panne du récepteur 3 qui se traduirait par une perturbation et/ou un défaut de la localisation du mobile mettant à mal le fonctionnement du système de navigation 4.

On souhaite de plus en plus utiliser ce système de radiolocalisation et de navigation sur des véhicules ou des appareils mobiles à la fois dans des applications militaires et dans des applications civiles.

Dans des applications militaires où le brouillage est souvent présent, le taux de panne acceptable de la chaîne de radionavigation est relativement élevé par rapport au taux de panne acceptable de la même chaîne dans le domaine civil, c'est-à-dire dans un contexte considéré a priori comme non brouillé. En effet, l'utilisation de la radiolocalisation par satellites dans un contexte civil impose des contraintes de sécurité des informations PVT en sortie du récepteur 3. Les informations PVT sont critiques, notamment car elles sont utilisées par des personnes non militaires et sur des véhicules transportant beaucoup de passagers (avion longs courriers dans le trafic civil par exemple).

Si l'on souhaite utiliser l'architecture de la figure 1 dans une application civile, il lors que les informations PVT soient sécurisées.

La seule solution pour respecter les contraintes de sécurité sur les informations PVT en sortie du récepteur 3 est de sécuriser l'ensemble de la chaîne comprenant l'antenne CRPA 12 (plateau d'antennes 1 et moyens de commande 2) et le récepteur 3. L'antenne CRPA 12 doit alors notamment respecter les normes RTCA/DO-178B (niveau A) pour la partie logicielle et RTCA/DO-254 (niveau A) pour la partie matérielle, afin d'obtenir la certification de sécurité requise pour une utilisation civile, Ces normes qui ont pour but d'obtenir un taux de panne extrêmement faible imposent des contraintes de traçabilité, de respect de méthodologies de conception, de développement et de tests.

La conception sécurisée d'une CRPA, qui est une antenne complexe, est par conséquent difficile et onéreuse.

Le document WO 2004/040328 A (KONINKLIJKE PHILIPS ELECTRONICS N.V; DOOLEY, SAUL, R; YULE, ANDREW, T) 13 mai 2004, qui est considéré comme étant l'état de la technique le plus proche de l'objet de la revendication 1 décrit un récepteur de radiolocalisation par satellites et une antenne à diagramme de rayonnement commandé ainsi qu'une antenne à diagramme de rayonnement fixe et des moyens de commutation aptes à relier un diagramme de rayonnement commandé à l'une ou l'autre des antennes.

### PRESENTATION DE L'INVENTION

L'invention propose de pallier au moins un de ces inconvénients.

A cet effet, l'invention propose une architecture sécurisée de radionavigation selon la revendication 1.

L'invention est avantageusement complétée par les caractéristiques des revendications dépendantes d'architecture.

L'invention concerne également un véhicule comportant une telle architecture.

L'invention présente de nombreux avantages.

L'invention propose ainsi une architecture de radiolocalisation à commutation d'antennes qui fonctionne soit en utilisant la CRPA dans le cas de l'ambiance militaire brouillée, soit en utilisant la FRPA sécurisée dans le cas de l'environnement civil non brouillé. Dans ce dernier cas, la FRPA sécurisée confère un haut niveau de sécurité au système de navigation.

L'invention propose une architecture de radiolocalisation dont on sécurise seulement l'antenne à diagramme de rayonnement fixe, ce qui est une opération plus simple et moins coûteuse que la sécurisation de l'antenne à diagramme de rayonnement commandé.

L'invention propose un moyen de commutation des antennes dont le mécanisme simple et sûr garantit soit la sécurisation de la chaîne de radiolocalisation en ambiance non brouillée, soit la disponibilité de cette même chaîne dans le cas de brouillage élevé.

L'invention propose une architecture de radiolocalisation avec une redondance des antennes.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1, déjà commentée, représente schématiquement une architecture de radiolocalisation comportant une antenne à diagramme de rayonnement commandé ; et
- les figures 2, 3 et 4 représentent schématiquement trois modes de réalisation possibles d'une architecture de radiolocalisation à redondance d'antennes selon l'invention, comportant une antenne à diagramme de rayonnement commandé et une antenne à diagramme de rayonnement fixe.

### DESCRIPTION DETAILLEE

L'invention consiste en une architecture de radiolocalisation sécurisée par un mécanisme de commutation d'antennes redondantes.

Les figures 2 et 3 montrent qu'une architecture sécurisée de radiolocalisation selon l'invention comporte principalement une antenne CRPA 12 et une antenne FRPA 6 aptes à recevoir des signaux en provenance de satellites. L'antenne CRPA à diagramme de rayonnement contrôlé est constituée par un plateau d'antennes 1 et par un module 2 de calcul et de contrôle comme décrit précédemment.

L'architecture comporte de plus des moyens 5 de commutation dont les entrées sont reliées à l'antenne CRPA 12 et à l'antenne FRPA 6. La sortie des moyens de commutation 5 est reliée à un récepteur 3 ou 34 de radiolocalisation par satellites.

La figure 2 montre que le récepteur 3 permet de donner à un système de navigation 4 des informations de localisation PVT (Position, Vitesse, Temps) du mobile sur lequel est montée l'architecture sécurisée de radionavigation. Sur la figure 3, le récepteur 3 et le système 4 sont intégrés en un seul module référencé par 34.

Les moyens de commutation 5 sont aptes à relier sélectivement le récepteur 3 ou 34 à l'antenne 12 à diagramme de rayonnement commandé ou à l'antenne 6 à diagramme de rayonnement fixe.

On comprend que dans une ambiance brouillée, le récepteur 3 ou 34 est relié à l'antenne 12 à diagramme de rayonnement commandé, alors que dans un environnement civil non brouillé, le récepteur 3 ou 34 est relié à l'antenne 6 à diagramme de rayonnement fixe.

L'antenne 6 à diagramme de rayonnement fixe est sécurisée. L'antenne 6 étant d'une structure très simple, l'effort pour la sécuriser est considérablement simplifié par rapport à celui requis pour sécuriser l'antenne complexe 12.

La sécurisation des moyens de commutation 5, qui font appel à des ressources matérielles et logicielles très simples comparées à celles mises en oeuvre dans l'antenne 12, n'est pas coûteuse.

Ainsi l'effort global pour sécuriser l'architecture de radionavigation selon l'invention est peu onéreux et permet de garantir le respect des méthodologies de conception, de développement et de tests prévus par les normes de certifications en vigueur dans le domaine civil.

Du fait de la sécurisation de l'architecture de radionavigation en ambiance non brouillée, le véhicule ou l'appareil mobile sur lequel est monté cette architecture selon l'invention peut être utilisé dans le domaine civil.

Du fait de la redondance des antennes et de la présence de l'antenne à diagramme de rayonnement commandé 12, le véhicule ou l'appareil est également utilisable dans un domaine militaire brouillé.

La détection d'un niveau non acceptable de brouillage des signaux satellites à destination de l'architecture entraîne une commutation des moyens de commutation 5 de l'antenne 6 à diagramme de rayonnement fixe vers l'antenne 12 à diagramme de rayonnement commandé. A contrario, lorsque le niveau de brouillage est acceptable, la commutation inverse de l'antenne 12 vers l'antenne 6 est effectuée.

Les moyens 5 de commutation forment donc un multiplexeur commutateur. La décision de commuter de l'antenne 12 vers l'antenne 6 et la décision de faire la commutation inverse sont fondées principalement sur la comparaison du niveau de brouillage avec des seuils adaptés.

Pour obtenir ces niveaux de brouillage, le récepteur 3 ou 34 comporte des moyens aptes à détecter le niveau de brouillage des signaux satellites à destination de l'architecture. Le niveau de brouillage transmis par le récepteur 3 ou 34 aux moyens de commutation 5 est respectivement repéré par N3 sur la figure 2 et par N34 sur la figure 3.

De même l'antenne 12 à diagramme de rayonnement commandé comporte des moyens aptes à détecter un niveau de brouillage du signal de positionnement à destination de l'architecture. Le niveau de brouillage transmis par l'antenne 12 aux moyens de commutation 5 est repéré par N12 sur les figures 2 et 3.

La logique de commande du multiplexeur de la figure 2 par exemple est fondée sur le processus suivant.

En l'absence de brouillage, le commutateur des moyens de commutation 5 est positionné sur l'antenne 6. Le récepteur 3 fournit alors au système de navigation 4 des données de localisation sécurisées garantissant son fonctionnement dans un mode certifié.

Quand le niveau de brouillage N3 détecté par le récepteur 3 dépasse un seuil S1 qui ne garantit plus son bon fonctionnement sur l'antenne 6, les moyens 5 de commutation basculent et se positionnent sur l'antenne 12. Cette décision de commutation est confortée par une information de bon fonctionnement de l'antenne 12. Le récepteur 3 fournit au système de navigation 4 des données de localisation garantissant son fonctionnement en ambiance brouillée.

Quand le niveau de brouillage N12 détecté par l'antenne 12 redescend au-dessous d'un seuil S2 qui garantit le bon fonctionnement du récepteur 3 sur l'antenne 6, les moyens 5 de commutation basculent et se positionnent sur l'antenne 6. Le système de navigation fonctionne à nouveau dans un mode certifié.

En d'autres termes, le système de commutation d'antennes et la logique de commande associée, qui utilise de façon pertinente des informations de brouillage issues du récepteur 3 et de l'antenne 12, sont aptes à garantir au système de navigation 4 l'utilisation soit des données de localisation sécurisées quand le brouillage est inférieur au seuil S2, soit des données de localisation précises lorsque le niveau de brouillage est supérieur au seuil S1.

L'utilisation de deux seuils de brouillage tels que le seuil S2 est inférieur au seuil S1 permet d'éviter un comportement instable de la commutation.

On rappelle que la figure 3 montre que le détecteur 3 et le système de navigation 4 peuvent être intégrés pour former un système 34 de navigation intégré.

La figure 2 montre, en pointillés, que les moyens de commutation formant multiplexeur 5 peuvent être intégrés au détecteur 3 pour former un ensemble référencé par 3'.

La figure 3 montre de même que le système de navigation intégré 34 peut comporter les moyens de commutation 5 formant multiplexeur 5 pour former, comme le montrent les pointillés, un système de navigation intégré comportant le multiplexeur. Ce système intégré est référencé par 34'.

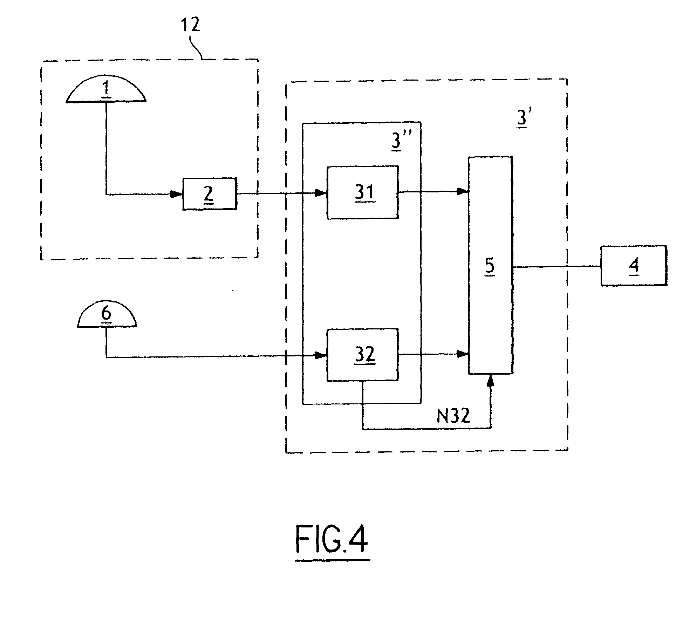

La figure 4 montre une variante de l'architecture de la figure 2 dans laquelle un récepteur double 3" comporte deux voies dont l'une, dite « protégée », est branchée sur l'antenne 12 et comporte un récepteur 31. L'autre voie du récepteur 3" est dite « sécurisée » et est branchée sur l'antenne 6. La voie sécurisée comporte un récepteur 32.

Les moyens 5 de commutation, situés après le récepteur 3" par rapport aux antennes 12 et 6, ont pour rôle d'envoyer au système de navigation 4 soit les données de localisation sécurisées (récepteur 3" alimenté par l'antenne 6 sécurisée), soit les données de localisation protégées (récepteur 3" alimenté par l'antenne 12 à diagramme contrôlé).

Dans cette architecture, le mécanisme de commutation n'utilise plus qu'une seule source de niveau de brouillage - celle provenant de la chaîne sécurisée comprenant l'antenne 6 et le récepteur 32 - ce qui a pour avantage par rapport aux modes de réalisation des figures 2 et 3 d'éviter la mise en cohérence de niveaux de brouillage issus de deux chaînes différentes. Le niveau de brouillage transmis par le récepteur 32 de la voie sécurisée du récepteur 3" aux moyens de commutation 5 est repéré par N32 sur la figure 4.

Comme dans l'architecture de la figure 2, deux seuils S1 et S2 de décision sont utilisés pour stabiliser la commutation.

L'architecture sécurisée de radiolocalisation selon l'invention s'applique avantageusement mais non limitativement à des avions de la marque AIRBUS et du type A400M.

## Revendications

1. Architecture sécurisée de radionavigation comprenant un récepteur (3, 34) de radio-localisation par satellites, une antenne (12) à diagramme de rayonnement commandé, une antenne (6) à diagramme de rayonnement fixe et des moyens (5) de commutation aptes à relier sélectivement le récepteur (3) à l'une ou l'autre des antennes, l'antenne (12) à diagramme de rayonnement commandé et l'antenne (6) à diagramme de rayonnement fixe étant distinctes et les moyens de commutation comportant un multiplexeur (5) formant commutateur entre les deux antennes, l'architecture comportant des moyens aptes à commander la commutation entre l'une ou l'autre des antennes en fonction du niveau de brouillage d'un signal de positionnement à destination de l'architecture, **caractérisé en ce que** le multiplexeur (5) est apte à relier le récepteur (3, 34) à l'antenne (12) à diagramme de rayonnement commandé lorsque le niveau de brouillage est supérieur à un premier seuil, S1, et apte à relier le récepteur (3, 34) à l'antenne (6) à diagramme de rayonnement fixe lorsque le niveau de brouillage est inférieur à un deuxième seuil, S2, **en ce qu'**un système (4) de navigation de l'architecture est sécurisé, car relié à l'antenne (6) à diagramme de rayonnement fixe, tant que le niveau de brouillage détecté par le récepteur (3) relié à l'antenne à diagramme de rayonnement fixe est inférieur à un deuxième seuil (S2), le récepteur (3) étant relié à l'antenne (6) à diagramme de rayonnement fixe, et le niveau de brouillage augmentant, le récepteur reste relié à l'antenne (6) tant que le niveau de brouillage reste inférieur à un premier seuil, S1, et se retrouve relié à l'antenne à diagramme de rayonnement commandé (12) dès lors que le niveau de brouillage atteint et/ou dépasse ledit premier seuil, S1, et **en ce que** le récepteur étant relié à l'antenne à diagramme de rayonnement commandé (12), et le niveau de brouillage diminuant, le récepteur reste relié à l'antenne tant que le niveau de brouillage reste supérieur à un deuxième seuil, S2 inférieur audit premier seuil, S1, et se retrouve relié à l'antenne à diagramme de rayonnement fixe (6) dès que le niveau de brouillage atteint et/ou devient inférieur audit deuxième seuil, S2.

2. Architecture selon la revendication 1, dans laquelle le récepteur (3, 34) comporte des moyens aptes à détecter au moins un niveau de brouillage d'un signal de positionnement à destination de l'architecture.

3. Architecture selon l'une des revendications 1 ou 2, dans laquelle l'antenne (12) à diagramme de rayonnement commandé comporte des moyens aptes à détecter au moins un niveau de brouillage d'un signal de positionnement à destination de l'architecture.

4. Architecture selon la revendication précédente, dans laquelle l'antenne (6) à diagramme de rayonnement fixe est sécurisée.

5. Architecture selon l'une des revendications précédentes, dans laquelle un système (4) de navigation de l'architecture est relié à l'antenne à diagramme de rayonnement commandé (12), tant que le niveau de brouillage que ladite antenne (12) détecte est supérieur à un premier seuil, S1.

6. Architecture selon l'une des revendications précédentes, dans laquelle le récepteur (3) fait en outre partie d'un système de navigation intégré (4) de l'architecture.

7. Architecture selon l'une des revendications précédentes, comportant un récepteur intégré (3', 34') dans lequel le multiplexeur (5) et le récepteur (3, 34) sont intégrés.

8. Architecture selon l'une des revendications précédentes, dans laquelle le récepteur (3") comporte deux voies de réception, l'une étant reliée à l'antenne (12) et l'autre étant reliée à l'antenne (6).

9. Architecture selon la revendication précédente, dans laquelle des moyens de commutation (5) sont situés après le récepteur (3") à deux voies, ledit récepteur (3") étant apte à fournir à un système (4) de navigation, selon le niveau de brouillage, soit des données de localisation sécurisées issues de l'antenne à diagramme de rayonnement fixe (6), soit des données de localisation protégées issues de l'antenne à diagramme de rayonnement commandé (12).

10. Véhicule, **caractérisé en ce qu'**il comporte un système de radiolocalisation par satellites muni d'une architecture selon l'une des revendications précédentes.

## Patentansprüche

1. Gesicherte Funknavigationsarchitektur, umfassend einen Empfänger (3, 34) für die Funkortung per Satellit, eine Antenne (12) mit gesteuertem Strahlungsdiagramm, eine Antenne (6) mit festem Strahlungsdiagramm und Umschaltmittel (5), die dafür geeignet sind, den Empfänger (3) selektiv mit der einen oder der anderen der Antennen zu verbinden, wobei die Antenne (12) mit gesteuertem Strahlungsdiagramm und die Antenne (6) mit festem Strahlungsdiagramm verschieden sind und die Umschaltmittel einen Multiplexer (5) aufweisen, der einen Umschalter zwischen den zwei Antennen bildet, wobei die Architektur Mittel aufweist, die dafür geeignet sind, die Umschaltung zwischen der einen oder der anderen der Antennen in Abhängigkeit von dem Störungspegel eines Positionsbestimmungssignals, das für die Architektur bestimmt ist, zu steuern,
**dadurch gekennzeichnet,**
**dass** der Multiplexer (5) dafür geeignet ist, den Empfänger (3, 34) mit der Antenne (12) mit gesteuertem Strahlungsdiagramm zu verbinden, wenn der Störungspegel höher als ein erster Schwellenwert S1 ist, und dafür geeignet ist, den Empfänger (3, 34) mit der Antenne (6) mit festem Strahlungsdiagramm zu verbinden, wenn der Störungspegel niedriger als ein zweiter Schwellenwert S2 ist,
**dass** ein Navigationssystem (4) der Architektur gesichert ist, da es mit der Antenne (6) mit festem Strahlungsdiagramm verbunden ist, solange der durch den Empfänger (3), der mit der Antenne (6) mit festem Strahlungsdiagramm verbunden ist, erfasste Störungspegel niedriger als ein zweiter Schwellenwert S2 ist, wenn der Empfänger (3) mit der Antenne (6) mit festem Strahlungsdiagramm verbunden ist, und wenn der Störungspegel steigt, der Empfänger mit der Antenne (6) solange verbunden bleibt, wie der Störungspegel niedriger als ein erster Schwellenwert S1 bleibt, und mit der Antenne mit gesteuertem Strahlungsdiagramm (12) verbunden wird, sobald der Störungspegel den ersten Schwellenwert S1 erreicht und/oder übersteigt,
und **dass**, wenn der Empfänger mit der Antenne mit gesteuertem Strahlungsdiagramm (12) verbunden ist, und wenn der Störungspegel sinkt, der Empfänger mit der Antenne solange verbunden bleibt, wie der Störungspegel höher als ein zweiter Schwellenwert S2 bleibt, der niedriger als der erste Schwellenwert S1 ist, und mit der Antenne mit festem Strahlungsdiagramm (6) verbunden wird, sobald der Störungspegel den zweiten Schwellenwert S2 erreicht und/oder unterschreitet.

2. Architektur nach Anspruch 1, wobei der Empfänger (3, 34) Mittel aufweist, die dafür geeignet sind, mindestens einen Störungspegel eines Positionsbestimmungssignals, das für die Architektur bestimmt ist, zu erfassen.

3. Architektur nach einem der Ansprüche 1 oder 2, wobei die Antenne (12) mit gesteuertem Strahlungsdiagramm Mittel aufweist, die dafür geeignet sind, mindestens einen Störungspegel eines Positionsbestimmungssignals, das für die Architektur bestimmt ist, zu erfassen.

4. Architektur nach dem vorhergehenden Anspruch, wobei die Antenne (6) mit festem Strahlungsdiagramm gesichert ist.

5. Architektur nach einem der vorhergehenden Ansprüche, wobei ein Navigationssystem (4) der Architektur mit der Antenne mit gesteuertem Strahlungsdiagramm (12) solange verbunden ist, wie der Störungspegel, den die Antenne (12) erfasst, höher als ein erster Schwellenwert S1 ist.

6. Architektur nach einem der vorhergehenden Ansprüche, wobei der Empfänger (3) des Weiteren Teil eines integrierten Navigationssystems (4) der Architektur ist.

7. Architektur nach einem der vorhergehenden Ansprüche, umfassend einen integrierten Empfänger (3', 34'), in den der Multiplexer (5) und der Empfänger (3, 34) integriert sind.

8. Architektur nach einem der vorhergehenden Ansprüche, wobei der Empfänger (3") zwei Empfangswege aufweist, wobei der eine mit der Antenne (12) und der andere mit der Antenne (6) verbunden ist.

9. Architektur nach dem vorhergehenden Anspruch, wobei Umschaltmittel (5) nach dem Zwei-Wege-Empfänger (3") angeordnet sind, wobei der Empfänger (3") dafür geeignet ist, einem Navigationssystem (4), entsprechend dem Störungspegel, entweder gesicherte Ortungsdaten, die von der Antenne mit festem Strahlungsdiagramm (6) stammen, oder geschützte Ortungsdaten, die von der Antenne mit gesteuertem Strahlungsdiagramm (12) stammen, bereitzustellen.

10. Fahrzeug, **dadurch gekennzeichnet, dass** es ein System zur Funkortung per Satellit aufweist, das mit einer Architektur nach einem der vorhergehenden Ansprüche ausgestattet ist.

## Claims

1. Secure radio-navigation architecture comprising a satellite radiolocation receiver (3, 34), a controlled radiation diagram antenna (12), a fixed radiation diagram antenna (6) and switching means (5) able to selectively connect the receiver (3) to one or other of the antennas, the controlled radiation diagram antenna (12) and the fixed radiation diagram antenna (6) being separate and the switching means comprising a multiplexor (5) forming a switch between the two antennas, the architecture comprising means able to control the switching between one or other of the antennas according to the level of interference of a positioning signal intended for the architecture, **characterised in that** the multiplexor (5) is able to connect the receiver (3, 34) to the controlled radiation diagram antenna (12) when the interference level is higher than a first threshold S1 and able to connect the receiver (3, 34) to the fixed radiation diagram antenna (6) when the interference level is below a second threshold S2, **in that** a navigation system (4) of the architecture is protected since it is connected to the fixed radiation diagram antenna (6) as long as the interference level detected by the receiver (3) connected to the fixed radiation diagram antenna is below a second threshold (S2), the receiver (3) being connected to the fixed radiation diagram antenna (6), and the interference level increasing, the receiver remains connected to the antenna (6) as long as the interference level remains below a first threshold S1, and is connected again to the controlled radiation diagram antenna (12) as soon as the interference level reaches and/or exceeds said first threshold S1, and **in that**, the receiver being connected to the controlled radiation diagram antenna (12) and the interference level decreasing, the receiver remains connected to the antenna as long as the interference level remains higher than a second threshold S2 lower than said first threshold S1, and is again connected to the fixed radiation diagram antenna (6) as soon as the interference level reaches and/or becomes lower than said second threshold S2.

2. Architecture according to claim 1, in which the receiver (3, 34) comprises means able to detect at least one interference level of a positioning signal intended for the architecture.

3. Architecture according to one of claims 1 or 2, in which the controlled radiation diagram antenna (12) comprises means able to detect at least one interference level of a positioning signal intended for the architecture.

4. Architecture according to the preceding claim, in which the fixed radiation diagram antenna (6) is protected.

5. Architecture according to one of the preceding claims, in which a navigation system (4) of the architecture is connected to the controlled radiation diagram antenna (12) as long as the detected interference level of said antenna (12) is greater than a first threshold S1.

6. Architecture according to one of the preceding claims, in which the receiver (3) also forms part of an integral navigation system (4) of the architecture.

7. Architecture according to one of the preceding claims, comprising an integrated receiver (3', 34') in which the multiplexor (5) and the receiver (3, 34) are integrated.

8. Architecture according to one of the preceding claims, in which the receiver (3") comprises two reception channels, one being connected to the antenna (12) and the other being connected to the antenna (6).

9. Architecture according to the preceding claim, in which switching means (5) are situated after the two-channel receiver (3"), said receiver (3") being able to supply to a navigation system (4), depending on the interference level, either secure location data coming from the fixed radiation diagram antenna (6) or protected location data coming from the controlled radiation diagram antenna (12).

10. Vehicle, **characterised in that** it comprises a satellite radiolocation system provided with an architecture according to one of the preceding claims.
